# EUROPEAN PATENT SPECIFICATION

(11) **EP 1 949 634 B1**
(45) Date of publication and mention of the grant of the patent: **27.04.2016**
(21) Application number: 06823636.3
(22) Date of filing: 17.11.2006
(51) Int. Cl.: H04L 27/26, H04B 7/06

(54) **METHOD AND APPARATUS FOR TRANSMITTING BY USING TRANSMIT DIVERSITY AT DFT SPREAD OFDMA**
VERFAHREN UND VORRICHTUNG ZUM SENDEN DURCH VERWENDUNG VON SENDEDIVERSITÄT BEI DFT-SPREIZ-OFDMA
PROCÉDÉ ET APPAREIL DE TRANSMISSION AU MOYEN D'UNE DIVERSITÉ DE TRANSMISSION À ACCÈS PAR RÉPARTITION ORTHOGONALE DE FRÉQUENCE ÉTALÉE DE TRANSFORMÉE DE FOURIER DISCRÈTE

(30) Priority: 17.11.2005 KR 20050110047; 20.09.2006 KR 20060091405
(43) Date of publication of application: 30.07.2008
(73) Proprietor: Electronics and Telecommunications Research Institute, Daejeon 305-350 (KR); SK Telecom Co., Ltd., Seoul 100-999 (KR); KTFreetel Co., Ltd., Songpa-gu Seoul 138-240 (KR)
(72) Inventor: KIM, Il-Gyu, Seoul 156-031 (KR); PARK, Hyeong-Geun, Daejeon-city 305-330 (KR); CHANG, Kap-Seok, Daejeon-city 302-210 (KR); KIM, Young-Hoon, Daejeon-city 305-340 (KR); BANG, Seung-Chan, Daejeon-city 302-280 (KR); SHIN, Eun-Jeong, Daejeon-city 305-804 (KR); JWA, Hye-Kyung, Daejeon-city 305-345 (KR); LEE, Moon-Sik, Daejeon-city 305-150 (KR)
(74) Representative: Betten & Resch
(86) International application number: PCT/KR2006/004844
(87) International publication number: WO 2007/058494

(56) References cited:
- EP-A2- 1 533 966
- WO-A1-2005/039233
- US-A1- 2001 046 864
- US-A1- 2004 001 429
- US-A1- 2004 062 226
- US-A1- 2004 147 289
- INSTITUTE FOR INFOCOMM RESEARCH (I2R) ET AL: "Transmit Antenna Selection Techniques for Uplink E-UTRA", 3RD GENERATION PARTNERSHIP PROJECT (3GPP); TECHNICALSPECIFICATION GROUP (TSG) RADIO ACCESS NETWORK (RAN); WORKINGGROUP 1 (WG1), XX, XX, no. R1-051398, 7 November 2005 (2005-11-07), pages 1/7-7/7, XP002475794,

## Description

### BACKGROUND OF THE INVENTION

### (a) Field of the Invention

The present invention relates to a packet data transmission method in orthogonal frequency division multiplex access (OFDMA), and an apparatus thereof. More particularly, it relates to a packet data transmission method using transmit diversity in an uplink of a cellular system using a discrete Fourier transform spread orthogonal frequency division multiplex access (DFT-S-OFDMA) method, and a transmitting apparatus thereof.

### (b) Description of the Related Art

Including a wireless local area network (WLAN), wireless broadcasting, or digital multimedia broadcasting (DMB), a fourth generation mobile communication system uses an orthogonal frequency division multiplex access (OFDMA) method for wideband high-speed data transmission.

The OFDMA method divides a frequency bandwidth of a channel into a plurality of frequency bandwidths and allocates a proper number of data bits to each bandwidth for transmission. Herein, each frequency bandwidth has a different gain and noise effect. The OFDMA method serially inputs a data stream into N parallel data rows and transmits the N parallel data rows respectively through separate subcarriers so as to increase the data rate. In this case, a discrete Fourier transform spread orthogonal frequency division multiplex access (DFT-S-OFDMA) method is used to discretely separate an OFDMA signal into a time axis and a frequency axis so as to analyze a complex signal.

A high data rate in a transmitting station and a receiving station of the OFDMA system can be realized by improving link throughputs and network capacity. In this case, the throughput can be significantly improved when the transmitting station and the receiving station respectively have multiple antennas, and thus each station transmits and receives data by using the multiple antennas. As described, a method for the transmitting station and the receiving station to transmit/receive data by using the multiple antennas is called multiple-input multiple-output (MIMO).

In an MIMO-applied OFDMA system, a transmitting station must distinguish a receiving station from other receiving stations when the corresponding receiving station attempts random access. Accordingly, a random access channel burst (RACH burst) is used to check channel estimation information including a frequency domain signature sequence or a time domain signature sequence, an identifier (ID) of a receiving station, and a resource request for call setting.

Recently, a transmitter of the OFDM system has included a transmit vector decision module and a transmit antenna decision module in order to select a specific antenna through which a RACH burst or a user packet data is transmitted among multiple antennas.

In addition, the transmit vector decision module calculates a transmit weight to be set for each antenna by using channel information calculated from a signal to noise ratio (SNR) or a code book, and the transmit antenna decision module selects an antenna unit through which the RACH burst or the user packet data is transmitting by using the transmit weight. Herein, the antenna unit includes an inverse fast Fourier transform (IFFT) unit, a cyclic prefix (CP) adder, a parallel-to-serial (P/S) converter, an intermediate frequency/radio frequency (IF/RF) converter, and an antenna.

That is, the transmitter of the OFDM system includes a multiplexer, a transmit vector decision module, a transmit antenna decision module, a plurality of IFFTs, a CP adder, a P/S converter, an IF/RF converter, and an antenna. As described, the transmitter has drawbacks including having many constituent elements, a complicated composition, an increased size of a mobile station, and an increased manufacturing cost.

In addition, although the MIMO is applied to the mobile station, the RACH burst and the user packet data are transmitted only by an antenna selected by the transmit vector decision module and the transmit antenna decision module, and therefore frequency and phase may vary at random, causing a fading effect. Accordingly, the size of a transmit signal may become greater than or smaller than an average size.

A variation speed of the fading effect may vary depending on a moving speed of the mobile station. That is, the variation speed of the fading effect is increased as the moving speed of the mobile station is increased, and the variation speed of the fading effect is decreased as the moving speed of the mobile station is decreased.

Since the variation speed of the fading effect is slow when the moving speed of the mobile station is slow, a deep fading period where the size of a signal is less than an average size is increased. During the deep fading period, a transmitted RACH signal cannot be demodulated so system performance is deteriorated.

Therefore, the transmitting station and the receiving station use all antennas when transmitting/receiving a RACH burst or user packet data to thereby use another antenna for data transmission when the deep fading effect occurs, and hence, a transmission method is required to reduce the deep fading period, and improve system performance.

While using an OFDM method, a MIMO method, and a smart antenna method, a long term evolution (LTE) method has been disclosed to increase a bandwidth that has been limited to 5Mhz to from this value to 1.25Mhz to 20Mhz. With the increase of the bandwidth, the LTE method can support a data rate of 100Mbps in a moving state and a data rate of 1 Gbps in a stopped state, and the data upload speed becomes 60Mbps. In addition, the LTE method has a characteristic of grouping an Internet protocol (IP) network and a data network into one group, and therefore a mobile station can be simplified in an OFDM-based wireless access network.

Such an LTE method uses an OFDMA method in a downlink, and uses a DFT-S-OFDMA method in an uplink. However, the RACH burst and the user packet data are transmitted by using one antenna since a method for transmitting DFT-S-OFMDA-bssed uplink data by using a plurality of antennas has not been realized in the LTE method, and accordingly the deep fading may occur.

US 20041147289 A1 describes a wireless transceiver including multiple antennas, an antenna switch, and a media access controller that controls the antenna switch for determining when to switch to another antenna based on packet error rate (PER). Instead of switching the antenna on a packet-by-packet basis, antenna selection is made after one or more packets errors have been detected. The CRC is used to identify receive packet errors. A timer is used to determine each transmit packet error when an acknowledge packet is not received in time.

The paper R1-051398 of the conference "3GPP TSG RAN WG1 #43" in Seoul, South Korea, Nov. 7 - 11, 2005, p. 1 - 7 presents some antenna selection techniques and reports about its advantages and applicability to single carrier FDMA radio access using cyclic prefix for uplink.

WO 2005 039233 A1 discloses a transmit and/or receive diversity achieved using multiple antennas. At any given time, a controllable switching module couples the single transmitter chain to one the plurality of transmit antennas. Over time, the switching module couples the output signals from the single transmitter chain to different transmit antennas. Switching decisions are based upon predetermined information, dwell information, and/or channel condition feedback information. Switching is performed on soma dwell and/or channel estimation boundaries. In some OFDM embodiments, each of multiple transmitter chains is coupled respectively to a different transmit antenna. Information to be transmitted is mapped to a plurality of tones. Different subsets of tones are formed for and transmitted through different transmit chain/antenna sets simultaneously.

EP 1 533 966 A2 describes a method of transmitting/receiving channel quality information (CQI) of subcarriers in an OFDM system where data is transmitted on the subcarriers via one or more transmit antennas. The subcarriers are grouped into subcarrier groups each having at least one subcarrier and further grouped into subgroups each having one or more subgroups. A user equipment generates CQIs for one or more allocated subcarrier groups and the transmit antennas or CQIs for the allocated subcarrier groups, the subgroups of the subcarrier groups, and the transmit antennas. The group CQIs and the subgroup CQIs are transmitted to a Node B in one or more physical channel frames.

### SUMMARY OF THE INVENTION

The present invention has been made in an effort to provide a data transmission method using transmit diversity in a DFT-S-OFDMA system transmitting a RACH burst and user packet data using all of a plurality of antennas for realization of an LATE technology using a plurality of antennas, and a transmitting apparatus of a mobile station for the transmission method.

An exemplary packet data transmission method according to one embodiment of the present invention is provided to a mobile station having a pluralité of antennas in an orthogonal frequency division multiplex access (OFDMA) system. The packet data transmission method includes (a) generating a random access channel (RACH) burst, (b) selecting a first antenna among the plurality of antennas and transmitting the RACH burst to a base station through the first antenna, (c) receiving a signal including information on whether the base station allows data transmission, in response to the RACH burst, and (d) when receiving a signal indicating that the data transmission is allowed, transmitting user packet data through the antenna. When receiving a signal indicating that the data transmission is not hallowed, a second antenna that is difference from the first antenna is selected, and the RACH burst is transmitted through the second antenna.

An exemplary packet data transmission method according to another embodiment of the present invention is provided to a mobile station having a plurality of antennas in an OFDMA system. The packet data transmission method includes (a) generating a random access channel (RACH) burst to be transmitted to a base station for channel information estimation, (b) transmitting the RACH burst to the base station by using the plurality of antennas, (c) receiving a signal transmitted from the base station, the signal indicating whether that transmission is allowed, in response to the RACH burst, and (d), when receiving a signal indicating that the data transmission is allowed, transmitting user packet data through an antenna that has been used for transmitting the RACH burst.

An exemplary transmitting apparatus according to another embodiment of the present invention is provided to a mobile station having a plurality of antennas in an OFDMA system. The transmitting apparatus includes a symbol-subcarrier mapper, an inverse fast Fourier transform (IFFT) unit, and a switching block. The symbol-subcarrier mapper maps a random access channel (RACH) burst to a subcarrier. The IFFT unit converts the RACH burst mapped to the subcarrier to time domain data. The switching block selects an antenna for transmitting the RACH burst output from the IFFT unit from the plurality of antennas.

An exemplary recording medium according to another embodiment of the present invention is installed on a mobile station having a plurality of antennas in an OFDMA system for user packet transmission. The recording medium stores a program that executes functions, including generating a random access channel burst (RACH), selecting a first antenna among the plurality of antennas and transmitting the RACH burst through the first antenna to a base station; receiving a signal indicating whether the base station allows data transmission of the base station, in response to the RACH burst; and transmitting the user packet data through the first antenna when a signal indicating that the data transmission is allowed is received and selecting a second antenna that is different from the first antenna and transmitting the RACH burst through the second antenna when a signal indicating that the data transmission is not allowed is received.

### BRIEF DESCRIPTION OF THE DRAWINGS

FIG. 1 is a schematic block diagram of a transmitter of a mobile station in a DFT-S-OFDMA system, transmitting a RACH burst or user packet data according to an exemplary embodiment of the present invention.
FIG. 2 shows a process for mapping data symbols by using a Fourier transform spreader and a symbol-subcarrier mapper.
FIG. 3 is a schematic block diagram of a transmitter of a DFT-S-OFDMA system according to another embodiment of the present invention.
FIG. 4 shows a structure of an LTE uplink frame using a DFT-S-OFDMA method.
FIG. 5 exemplarily shows a process for transmitting a RACH burst or user packet data by simultaneously applying antenna switching diversity and frequency hopping to a RACH channel.
FIG. 6 is a flowchart of a random access channel transmission process using transmit diversity according to an exemplary embodiment of the present invention.

### DETAILED DESCRIPTION OF THE EMBODIMENTS

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

In addition, unless explicitly described to the contrary, the word "comprise" and variations such as "comprises" and "comprising" will be understood to imply the inclusion of stated elements but not the exclusion of any other elements.

Further, throughout this specification and the claims which follow, each block is a unit that performs a specific function or operation, and can be realized by hardware or software, or a combination of both.

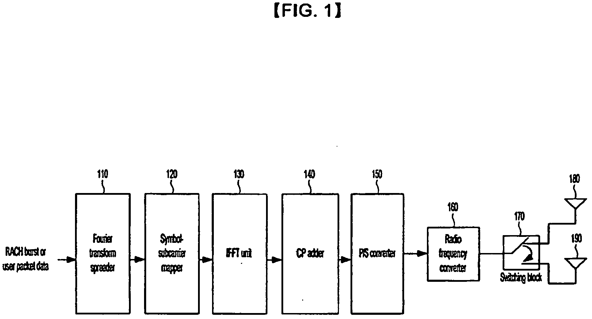

FIG. 1 a schematic block diagram of a transmitter of a mobile station of a DFT-S-OFDMA system that transmits a RACH burst or user packet data by using transmit diversity according to an exemplary embodiment of the present invention.

The transmitter of the mobile station according to the exemplary embodiment of the present invention includes a Fourier transform spreader 110, a symbol-subcarrier mapper 120, an inverse Fourier transform unit 130, a cyclic prefix adder (hereinafter referred to as a "CP adder") 140, a parallel to serial converter (hereinafter referred to as a "P/S converter") 150, a radio frequency converter 160, a switching block 170, and a plurality of antennas. It is illustrated in FIG. 1 that a transmitter of a mobile station has two antennas, for convenience of description.

The Fourier transform spreader 110 performs a spreading operation by performing a fast Fourier transform operation or a discrete Fourier transform operation on a RACH burst or user packet data input when the mobile station attempts random access.

When M data symbols are input to the Fourier transform spreader 110, the Fourier transform spreader 110 performs the fast Fourier transform (FFT) operation when M is 2ⁿ and performs the discrete Fourier transform operation when M is not 2ⁿ. As described, the Fourier transform spreader 110 that processes M input data symbols is commonly called an M-point Fourier transform spreader.

The symbol-subcarrier mapper 120 maps a spread RACH burst or spread user packet data output from the Fourier transform spreader 110 to an OFDMA subcarrier.

In this case, the Fourier transform spreader 110 and the symbol-subcarrier mapper 120 are used to prevent an occurrence of a high peak to average power ratio (PAPR) in a conventional OFDMA method.

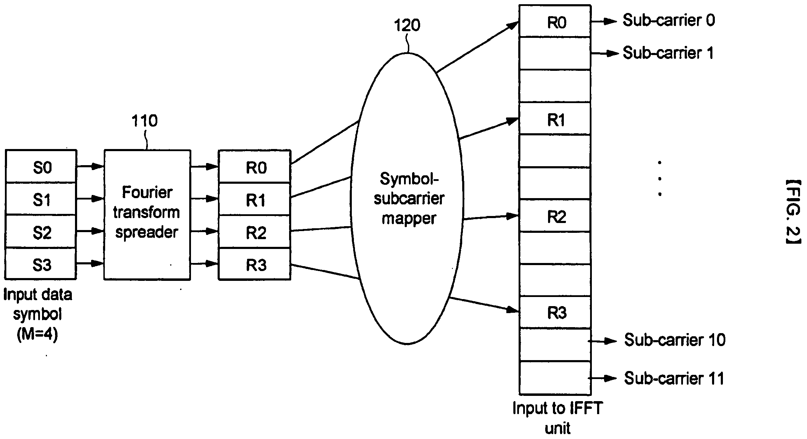

FIG. 2 shows a data symbol mapping process of the Fourier transform spreader and the symbol-subcarrier mapper. It is assumed in FIG. 2 that the number of input data symbols is 4 and that the input data symbol is a RACH burst symbol or a user data symbol, for convenience of description.

The Fourier transform spreader 110 performs an FFT spreading process on the four input symbols S0, S1, S2, and S3. In addition, the symbol-subcarrier mapper 120 maps the FFT spreading processed-symbols R0, R1, R2, and R3 to a subcarrier of the inverse Fourier transform unit 130. It is illustrated in FIG. 2 that the inverse Fourier transform unit 130 has 12 subcarriers, and that the four FFT-spread symbols R0, R1, R2, and R3 are respectively mapped to a subcarrier 0, a subcarrier 3, a subcarrier 6, and a subcarrier 9 by the symbol-subcarrier mapper 120.

As described, a PAPR can be reduced by mapping the RACH burst or the user packet data to a subcarrier by using the Fourier transform spreader 110 and the symbol-subcarrier mapper 120, and accordingly, uplink cell coverage can be increased when using a power amplifier that is the same as in the conventional OFDMA method.

The inverse Fourier transform unit 130 inverse-Fourier transforms the RACH burst of the user packet data mapped to the subcanier to time domain data.

The CP adder 140 adds a cyclic prefix (CP) to a front end of the time domain data, and the P/S converter 150 converts the CP-added RACH burst or user packet data in a parallel signal form into a serial signal.

The digital-type RACH burst or user packet data serially converted by the P/S converter 150 is converted into a radio frequency (RF) signal and filtered through the radio frequency converter 160. For this purpose, the radio frequency converter 160 includes an up-converter, an amplifier, and a filter.

The switching block 170 selects an antenna through which a RACH burst is transmitted so as to alternately transmit the RACH burst delivered from the radio frequency converter 160 through a different antenna. That is, as shown in FIG. 1, in the transmitter of the DFT-S-OFDMA system including two antennas 180 and 182, when more than two RACH bursts are transmitted to the switching block 170, the switching block 170 alternately transmits the RACH bursts through the first antenna 180 and the second antenna 182. Accordingly, the first antenna 180 and the second antenna 182 alternately transmit the RACH bursts. In this case, the RACH burst transmitted from the transmitter of the mobile station is transmitted to the base station.

As described, the mobile station transmits the RACH burst to the base station through an antenna selected by the switching block 170, and transmits user packet data through one antenna among a plurality of antennas when receiving a response to the transmitted RACH burst from the base station.

The mobile station of FIG. 1 is formed of one radio frequency converter 160 and one switching block 170, and the mobile station may be formed of one switching block 170 and a plurality of radio frequency converters 160.

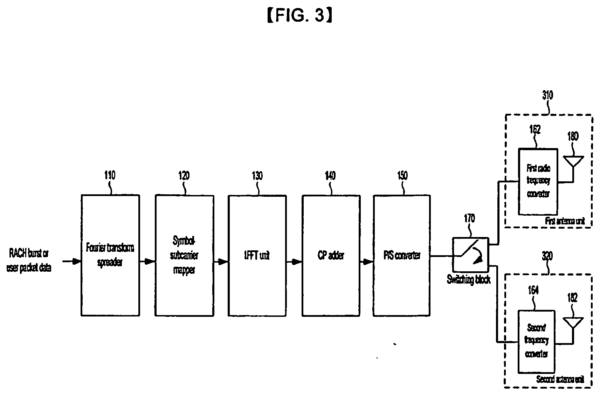

FIG. 3 is a schematic block diagram of the transmitter of the DFT-S-OFDMA system according to another exemplary embodiment of the present invention.

A transmitter of a mobile station according to this exemplary embodiment of the present invention includes a Fourier transform spreader 110, a symbol-subcarrier mapper 120, an inverse Fourier transform unit 130, a CP adder 140, and a P/S converter 150 that are the same constituent elements of the transmitter of FIG. 2.

The switching block 170 that receives an digital-type RACH burst that has been converted into a serial signal from the P/S converter 150 alternately selects the RACH burst through a first antenna unit 310 and a second antenna unit 320.

When the RACH burst is transmitted through the first antenna unit 310 by the switching block 170, a first radio frequency converter 162 converts the RACH burst into an RF signal and filters the radio frequency signal by using an up-converter, an amplifier, and a filter, and transmits the filtered RF signal to a first antenna 180. The first antenna 180 transmits the received RACH burst to the base station.

When the switching block 170 selects the second antenna unit 320 and thus the RACH burst is transmitted to the second antenna unit 320, the second radio frequency converter 164 of the second antenna unit 320 converts and filters the transmitted RACH burst into a radio frequency signal by using an up-converter, an amplifier, and a filter, and delivers the filtered signal to a second antenna unit 182. The second antenna 182 transmits the received RACH burst to the base station.

The transmitter of the DFT-S-OFDMA system, formed as shown in FIG. 3, further includes one radio frequency converter as opposed to the transmitter of FIG. 1. In this case, a switching operation of the switching block 170 is performed in a baseband, and therefore the RACH burst can be transmitted by using frequency and spectrum of the original RACH burst.

The transmitter of the DFT-S-OFDMA system of FIG. 1 and FIG. 3 transmits a RACH burst and user packet data to the base station through an LTE uplink frame.

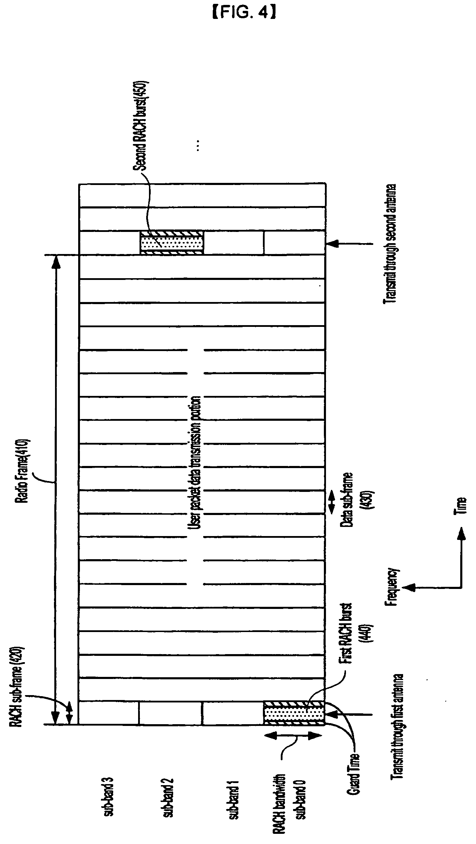

FIG. 4 shows a configuration diagram of an LTE uplink frame that uses the DFT-S-OFDMA method according to the exemplary embodiment of the present invention.

An uplink frame used in the exemplary embodiment of the present invention is formed of a plurality of radio frames 410, and each radio frame 410 includes one RACH sub-frame 420 and a plurality of data sub-frames 430.

The RACH sub-frame 420 includes a RACH burst to be transmitted to the base station from the mobile station, and a guard time is provided in a front end of the RACH burst.

In addition, the RACH sub-frame 420 transmits the RACH burst by using one sub-band among a plurality of sub-bands as a bandwidth according to frequency. FIG. 4 shows an LTE uplink frame including four sub-bands: sub-band 0, sub-band 1, sub-band 2, and sub-band 3, and a first RACH burst 440 transmitted through a first antenna in the first RACH sub-frame 420 is transmitted to a bandwidth of the sub-band 0.

In addition, the RACH burst transmitted through the RACH sub-frame 420 is transmitted through different antennas at regular intervals (i.e., radio frame intervals).

That is, the first RACH burst 440 is transmitted through the first antenna to a bandwidth of a specific sub-band (sub-band 0 in FIG. 4), and a second RACH burst 450 is transmitted through a second antenna to a bandwidth of another sub-band (sub-band 2 in FIG. 4) after user packet data is transmitted through the plurality of data frames during one radio frame.

When receiving the RACH burst, the base station transmits a response to the received RACH burst to the mobile station. When the base station allows packet data transmission of the mobile station, the base station transmits an ACK signal, and when the base station does now allow the packet data transmission of the mobile station, the base station transmits a NACK signal.

The base station transmits a transmission timing control bit to a downlink after demodulating the RACH burst so as to control a signal transmitted from each mobile station to the base station to be included within a CP.

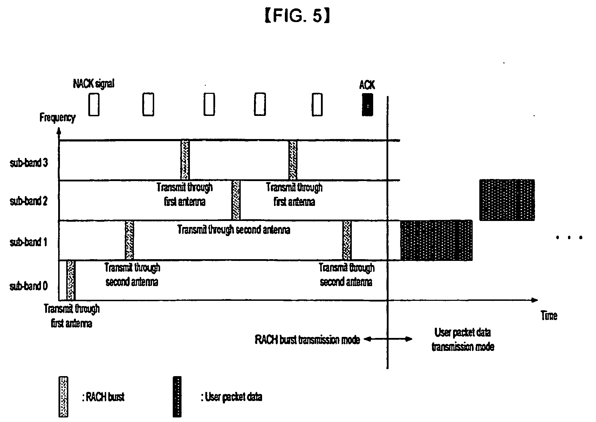

FIG. 5 exemplarily shows a process for transmitting a RACH burst or user packet data by simultaneously applying switching diversity and frequency hopping to a RACH channel.

The mobile station generates a RACH burst with a constant interval, and transmits the generated RACH burst through an antenna selected by the switching block 170. Herein, the mobile station includes a transmitter that includes a first antenna 180 and a second antenna 182, and transmits a RACH burst as shown in FIG. 1 and FIG. 3.

The mobile station transmits a first RACH burst through the first antenna. In this case, the mobile station is set to a RACH burst transmission mode, and the first RACH burst transmitted from the mobile station has a bandwidth of the sub-band 0.

When receiving the first RACH burst transmitted through the bandwidth of the sub-band 0 from the mobile station, the base station demodulates the received first RACH burst and transmits an ACK or NACK to the mobile station as a response. When receiving the NACK response from the base station, the mobile station transmits a second RACH burst after a constant time (i.e. data sub-frame transmission time) passed. In this case, the switching block 170 of the mobile station selects the second antenna and transmits the second RACH burst through the second antenna. In addition, the second RACH burst is transmitted through another sub-band that is different from that of the first RACH burst. In FIG. 5, the second RACH burst is transmitted through a bandwidth of the sub-band 1.

When receiving the second RACH burst from the mobile station, the base station demodulates the second RACH burst and transmits an ACK response or a NACK response. When the base station transmits the NACK response to the mobile station, the mobile station transmits a third RACH burst through a bandwidth of a sub-band 3 by using the first antenna, and receives an ACK response or a NACK response for the third RACH burst from the base station.

When the mobile receives an ACK response from the base station while repeating the above-state process, the mobile station changes its mode from the RACH burst transmission mode to a user packet data transmission mode, transmits user packet data through a bandwidth of a sub-band (i.e., sub-band 1 of FIG. 5) through which a RACH burst is transmitted before receiving the ACK response from the base station by using an antenna (i.e., the second antenna of FIG. 5) through which a RACH burst (i.e., the sixth RACH burst of FIG. 5) is transmitted before receiving the ACR response from the base station.

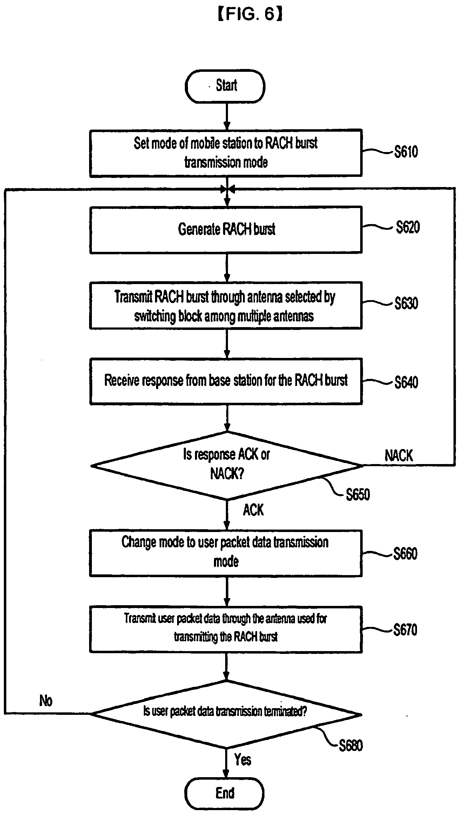

FIG. 6 is a flowchart of a random access channel transmission process using transmit diversity according to the exemplary embodiment of the present invention.

When a mobile station having a plurality of antennas of the DFT-S-OFDMA system transmits user packet data by using an uplink, the mobile station must check a frequency domain signature sequence, a time domain signature sequence, a base station identifier (ID), and resource request information for call setting for the user packet data transmission, and therefore the mobile station needs to transmits a RACH burst to the base station. Accordingly, the mobile station sets a RACH burst transmission mode for generation and transmission of the RACH burst, in step S610.

The mobile station sets its mode to the RACH burst transmission mode and generates a RACH burst in step S620. Then, the mobile station delivers the generated RACH burst to the switching block 170 through the Fourier transform spreader 110, the symbol-subcarrier mapper 120, the inverse Fourier transform unit 130, the CP adder 140, and the P/S converter 150. In this case, the RACH burst may be delivered to the switching block 170 after being converted into a radio frequency signal and filtered through the radio frequency converter 160.

The switching block 170 selects one antenna among the plurality of antennas of the mobile station, and transmits the RACH burst through the selected antenna. In this case, the switching block 170 randomly selects an antenna. In addition, the RACH burst is transmitted through a RACH sub-frame of the LTE uplink frame, and a bandwidth of the RACH sub-frame uses a specific sub-band among frequencies of the LTE uplink frame, in step S630.

When receiving the RACH burst transmitted from the mobile station, the base station transmits an ACK signal or a NACK signal to the mobile station in response to the RACH burst. The mobile station checks transmission of the RACH burst through the response transmitted from the base station, in step S640.

When receiving the NACK signal from the base station, the mobile station generates a RACH burst, transmits the RACH burst by using an antenna selected by the switching block 170, and repeats the above-stated processes from step S620 after checking a response from the base station. In this case, the switching block 170 may select an antenna that is different from the antenna through which the previous RACH burst was transmitted.

However, when receiving the ACK signal from the base station in step S650, the mobile station changes its mode to the user packet data transmission mode in step S660, and transmits user packet data by using the antenna through which the RACH burst has been transmitted. In this case, the same bandwidth of the specific sub-band through which the RACH burst has been transmitted may be used, in step S670.

The mobile station checks whether the user packet data transmission is completed, and terminates uplink transmission of the mobile station when the user packet data transmission is completed. When the user packet data transmission is not completed, the mobile station repeats the above-stated processes from step S620, in step S680. That is, the mobile station generates a RACH burst and transmits the RACH burst to the base station, and when the base station transmits an ACK response for the transmitted RACH burst, the mobile station transmits user packet data by using the corresponding antenna.

Through the above-stated processes, the mobile station having more then two transmit antennas transmits a RACH burst by using transmit diverse ever the uplink of the DFT-S-OFDMA system.

The above-described exemplary embodiments of the present invention can be realized not only through a method and an apparatus, but also through a program that can perform functions corresponding to configurations of the exemplary embodiments of the present invention or a recording medium storing the program, and this can be easily realized by a person skilled in the art.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

As described above, according to the exemplary embodiments of the present invention, a RACH burst and user packet data are transmitted by using a mobile station including multiple antennas In an LTE-apptied OFDMA system, and therefore data transmission can be performed with a wide bandwidth and a high data rate, and the deep fading period that may occur during the data transmission can be reduced, thereby preventing call dropping and improving transmission performance.

## Claims

1. A packet data transmission method of a mobile station including a plurality of antennas (180, 190), in an orthogonal frequency division multiplex access, OFDMA, system, the packet data transmission method comprising:
a) generating a random access channel, RACH, burst;
b) selecting a first antenna among the plurality of antennas (180, 190) and transmitting the RACH burst to a base station through the first antenna;
c) receiving a signal including information on whether the base station allows data transmission, in response to the RACH burst; and
d) when receiving a signal indicating that the data transmission is allowed, transmitting user packet data through the first antenna, wherein when receiving a signal indicating that the data transmission is not allowed, selecting a second antenna that is different from the first antenna and transmitting the RACH burst through the second antenna.

2. The packet data transmission method of claim 1 , wherein the transmission of the RACH burst through the second antenna comprises:
receiving a signal indicating whether the base station allows the data transmission, in response to the RACH burst; and when receiving a signal indicating that the data transmission is allowed, transmitting the user packet data through the second antenna, and when receiving a signal indicating that the data transmission is not allowed, selecting a third antenna or the first antenna and transmitting through the selected antenna, the selected antenna being different from the second antenna.

3. The packet data transmission method of claim 1 , wherein the second antenna transmits the RACH burst by using a sub-band that is different from the sub-band used for transmitting the RACH burst by the first antenna.

4. The packet data transmission method of claim 1, wherein in (d), when the signal indicating that the data transmission is allowed is received, transmitting the user packet data by using the sub-band which was used for transmitting the last RACH burst.

5. The packet data transmission method of claim 1, wherein, before b), the packet transmission method further comprises setting a mode of the mobile station to a RACH burst transmission mode for transmitting the RACH burst.

6. The packet data transmission method of claim 5, wherein, when the signal indicating that the data transmission is allowed is received, the RACH burst transmission mode is changed to a user packet data transmission mode.

7. A transmitting apparatus for a mobile station having a plurality of antennas (180, 190) in an orthogonal frequency division multiple access, OFDMA, system, the transmitting apparatus comprising:
a) a symbol-subcarrier mapper (120) for mapping a random access channel, RACH, burst to a subcarrier;
b) an inverse fast Fourier transform, IFFT, unit (130) for converting the RACH burst mapped to the subcarrier to time domain data; and
c) a switching block (170) for selecting one of the plurality of antennas (180, 190) for transmitting the RACH burst output from the IFFT unit from the plurality of antennas (180, 190); and
(d) means for receiving a signal including information on whether the base station allows data transmission, in response to the RACH burst; and
e) means for transmitting user packet data through said selected antenna if said received signal indicates that data transmission is allowed, otherwise repeating and selecting a different antenna at step c).

8. The transmitting apparatus of claim 7, further comprising a plurality of radio frequency converters (162, 164) for converting and filtering the RACH burst output from the IFFT unit (130) to a radio frequency signal, and respectively corresponding to the plurality of antennas, wherein each of radio frequency converters (162, 164) is connected between the switching block (170) and the corresponding antenna among the plurality of antennas (180, 182).

9. The transmitting apparatus of claim 8, wherein the switching block (170) transmits the RACH burst output from the IFFT unit (130) and user packet data to be transmitted through the transmitting apparatus to a radio frequency converter (162, 164) connected to the selected antenna.

10. The transmitting apparatus of claim 9, wherein the RACH burst and the user packet data are transmitted through a frequency and spectrum of a baseband.

11. The transmitting apparatus of claim 7, further comprising a radio frequency converter (160), connected between the IFFT unit (130) and the switching block (170), for converting and filtering the RACH burst output from the IFFT to a radio frequency signal.

12. The transmitting apparatus of claim 7, further comprising a fast Fourier transform spreader (110) for performing fast Fourier transform spreading on the RACH burst and transmitting the spread RACH burst to the symbol-subcarrier mapper (120).

13. The transmitting apparatus of claim 12, wherein the fast Fourier transform spreader (110) performs a fast Fourier transform operation when the number of symbols of the RACH burst corresponds to 2ⁿ, and performs a discrete Fourier transform operation when the number of symbols of the RACH burst does not correspond to 2ⁿ.

14. The transmitting apparatus of claim 7, further comprising:
a cyclic prefix, CP, adder (140) for adding a CP to the RACH burst converted to the time domain data through the IFFT unit (130); and a parallel-to-serial, P/S, converter (150) for converting the CP-added RACH burst in a parallel form to a serial signal.

15. The transmitting apparatus of claim 7, wherein, user packet data is transmitted through an antenna through which the RACH burst is transmitted when the RACH burst is transmitted to the base station and a data transmission acceptance signal for the RACH burst is received from the base station.

16. A recording medium for a mobile station including a plurality of antennas (180, 190) for transmission of user packet data in an orthogonal frequency division multiplex access, OFDMA, system, a program being written in the recording medium, wherein the program executes functions, including:
generating a random access channel burst, RACH, selecting a first antenna among the plurality of antennas and transmitting the RACH burst through the first antenna to a base station;
receiving a signal indicating whether the base station allows data transmission of the base station, in response to the RACH burst; and
transmitting the user packet data through the first antenna when a signal indicating that the data transmission is allowed is received, and selecting a second antenna that is different from the first antenna and transmitting the RACH burst through the second antenna when a signal indicating that the data transmission is not allowed is received.

## Patentansprüche

1. Paketdaten-Sendeverfahren einer Mobilstation mit einer Mehrzahl von Antennen (180, 190) in einem Orthogonal-Frequenzvielfachzugriff, OFDMA, -System, wobei das Paketdaten-Sendeverfahren umfasst:
a) Erzeugen eines Direktzugriffskanal, RACH, -Datenblocks;
b) Auswählen einer ersten Antenne aus der Mehrzahl von Antennen (180, 190) und Senden des RACH-Datenblocks durch die erste Antenne zu einer Basisstation;
c) Empfangen eines Signals, das Informationen enthält, ob die Basisstation Datensendung erlaubt, als Antwort auf den RACH-Datenblock; und
d) wenn ein Signal empfangen wird, das anzeigt, dass die Datensendung erlaubt ist, Senden von Benutzerpaketdaten durch die erste Antenne, und wenn ein Signal empfangen wird, das anzeigt, dass die Datensendung nicht erlaubt ist, Auswählen einer zweiten Antenne, die von der ersten Antenne verschieden ist, und Senden des RACH-Datenblocks durch die zweite Antenne.

2. Paketdaten-Sendeverfahren nach Anspruch 1, wobei das Senden des RACH-Datenblocks durch die zweite Antenne umfasst:
Empfangen eines Signals, das anzeigt, ob die Basisstation die Datensendung erlaubt, als Antwort auf den RACH-Datenblock; und wenn ein Signal empfangen wird, das anzeigt, dass die Datensendung erlaubt ist, Senden der Benutzerpaketdaten durch die zweite Antenne, und wenn ein Signal empfangen wird, das anzeigt, dass die Datensendung nicht erlaubt ist, Auswählen einer dritten Antenne oder der ersten Antenne und Senden durch die ausgewählte Antenne, wobei die ausgewählte Antenne von der zweiten Antenne verschieden ist.

3. Paketdaten-Sendeverfahren nach Anspruch 1, wobei die zweite Antenne den RACH-Datenblock unter Verwendung eines Teilbandes sendet, das von dem Teilband verschieden ist, das zum Senden des RACH-Datenblocks mittels der ersten Antenne verwendet wird.

4. Paketdaten-Sendeverfahren nach Anspruch 1, wobei in (d), wenn das Signal empfangen wird, das anzeigt, dass die Datensendung erlaubt ist, die Benutzerpaketdaten unter Verwendung des Teilbandes gesendet werden, das zum Senden des letzten RACH-Datenblocks verwendet worden ist.

5. Paketdaten-Sendeverfahren nach Anspruch 1, wobei vor b) das Paketsendeverfahren weiterhin umfasst, eine Betriebsart der Mobilstation auf eine Betriebsart RACH-Datenblock-Sendung zum Senden des RACH-Datenblocks zu setzen.

6. Paketdaten-Sendeverfahren nach Anspruch 5, wobei, wenn das Signal empfangen wird, das anzeigt, dass die Datensendung erlaubt ist, die Betriebsart RACH-Datenblock-Sendung in eine Betriebsart Benutzerpaketdaten-Sendung geändert wird.

7. Sendevorrichtung für eine Mobilstation mit einer Mehrzahl von Antennen (180, 190) in einem Orthogonal-Frequenzvielfachzugriff, OFDMA, -System, wobei die Sendevorrichtung umfasst:
a) einen Zeichen-Nebenträger-Umsetzer (120) zum Umsetzen eines Direktzugriffskanal, RACH, -Datenblocks auf einen Nebenträger;
b) eine Einheit (130) für inverse schnelle Fourier-Transformation, IFFT, zum Umwandeln des auf den Nebenträger umgesetzten RACH-Datenblocks in Zeitdomänendaten; und
c) einen Umschaltblock (170) zum Auswählen einer von der Mehrzahl von Antennen (180, 190) zum Senden des von der IFFT-Einheit ausgegebenen RACH-Datenblocks von der Mehrzahl von Antennen (180, 190); und
d) Mittel zum Empfangen eines Signals, das Informationen enthält, ob die Basisstation Datensendung erlaubt, als Antwort auf den RACH-Datenblock; und
e) Mittel zum Senden von Benutzerpaketdaten durch die ausgewählte Antenne, wenn das empfangene Signal anzeigt, dass Datensendung erlaubt ist, und andernfalls Wiederholen und Auswählen einer anderen Antenne im Schritt c).

8. Sendevorrichtung nach Anspruch 7, die weiterhin eine Mehrzahl von Funkfrequenzwandlern (162, 164) zum Umwandeln und Filtern des von der IFFT-Einheit (130) ausgegebenen RACH-Datenblocks in ein Funkfrequenzsignal und jeweils entsprechend der Mehrzahl von Antennen umfasst, wobei ein jeder der Funkfrequenzwandler (162, 164) zwischen dem Umschaltblock (170) und der entsprechenden Antenne aus der Mehrzahl von Antennen (180, 182) verbunden ist.

9. Sendevorrichtung nach Anspruch 8, wobei der Umschaltblock (170) den von der IFFT-Einheit (130) ausgegebenen RACH-Datenblock und Benutzerpaketdaten sendet, um durch die Sendevorrichtung zu einem mit der ausgewählten Antenne verbundenen Funkfrequenzwandler (162, 164) gesendet zu werden.

10. Sendevorrichtung nach Anspruch 9, wobei der RACH-Datenblock und die Benutzerpaketdaten durch eine Frequenz und ein Spektrum eines Basisbandes gesendet werden.

11. Sendevorrichtung nach Anspruch 7, die weiterhin einen Funkfrequenzwandler (160), der zwischen der IFFT-Einheit (130) und dem Umschaltblock (170) verbunden ist, zum Umwandeln und Filtern des vom IFFT ausgegebenen RACH-Datenblocks in ein Funkfrequenzsignal umfasst.

12. Sendevorrichtung nach Anspruch 7, die weiterhin einen Schnelle-Fourier-Transformation-Spreizer (110) zum Durchführen von Schnelle-Fourier Transformation-Spreizung an dem RACH-Datenblock und Senden des gespreizten RACH-Datenblocks zu dem Zeichen-Nebenträger-Umsetzer (120) umfasst.

13. Sendevorrichtung nach Anspruch 12, wobei der Schnelle-Fourier-Transformation-Spreizer (110) eine Schnelle-Fourier-Transformation-Operation durchführt, wenn die Zahl der Zeichen des RACH-Datenblocks 2ⁿ entspricht, und eine Diskrete-Fourier-Transformation-Operation durchführt, wenn die Zahl der Zeichen des RACH-Datenblocks nicht 2ⁿ entspricht.

14. Sendevorrichtung nach Anspruch 7, die weiterhin umfasst:
einen Zykluspräfix , CP, -Addierer (140) zum Addieren eines CP zu dem durch die IFFT-Einheit (130) in die Zeitdomänendaten umgewandelten RACH-Datenblock; und einen Parallel-Seriell, P/S, -Wandler (150) zum Umwandeln des CP-addierten RACH-Datenblocks in einer parallelen Form in ein serielles Signal.

15. Sendevorrichtung nach Anspruch 7, wobei Benutzerpaketdaten durch eine Antenne gesendet werden, durch die der RACH-Datenblock gesendet wird, wenn der RACH-Datenblock zu der Basisstation gesendet wird und ein Datensendungs-Akzeptanzsignal für den RACH-Datenblock von der Basisstation empfangen wird.

16. Aufzeichnungsmedium für eine Mobilstation mit einer Mehrzahl von Antennen (180, 190) zum Senden von Benutzerpaketdaten in einem Orthogonal-Frequenzvielfachzugriff, OFDMA, -System, wobei ein auf das Aufzeichnungsmedium geschriebenes Programm Funktionen ausführt, die umfassen:
Erzeugen eines Direktzugriffskanal-Datenblocks, RACH;
Auswählen einer ersten Antenne aus der Mehrzahl von Antennen und Senden des RACH-Datenblocks durch die erste Antenne zu einer Basisstation;
Empfangen eines Signals, das anzeigt, ob die Basisstation Datensendung der Basisstation erlaubt, als Antwort auf den RACH-Datenblock; und
Senden der Benutzerpaketdaten durch die erste Antenne, wenn ein Signal empfangen wird, das anzeigt, dass die Datensendung erlaubt ist, und Auswählen einer zweiten Antenne, die von der ersten Antenne verschieden ist, und Senden des RACH-Datenblocks durch die zweite Antenne, wenn ein Signal empfangen wird, das anzeigt, dass die Datensendung nicht erlaubt ist.

## Revendications

1. Procédé de transmission de données en paquet d'une station mobile incluant une pluralité d'antennes (180, 190), dans un système d'accès multiple par répartition orthogonale en fréquence, OFDMA, le procédé de transmission de données en paquet comprenant :
a) la génération d'une rafale de canal à accès aléatoire, RACH ;
b) la sélection d'une première antenne parmi la pluralité d'antennes (180, 190) et la transmission de la rafale RACH à une station de base par l'intermédiaire de la première antenne ;
c) la réception d'un signal incluant des informations consistant à savoir si la station de base permet une transmission de données, en réponse à la rafale RACH ; et
d) lors de la réception d'un signal indiquant que la transmission de données est autorisée, la transmission de données en paquet d'utilisateur par l'intermédiaire de la première antenne, dans lequel, lors de la réception d'un signal indiquant que la transmission de données n'est pas autorisée, la sélection d'une deuxième antenne qui est différente de la première antenne et la transmission de la rafale RACH par l'intermédiaire de la deuxième antenne.

2. Procédé de transmission de données en paquet selon la revendication 1, dans lequel la transmission de la rafale RACH par l'intermédiaire de la deuxième antenne comprend :
la réception d'un signal indiquant si la station de base permet la transmission de données, en réponse à la rafale RACH ; et lors de la réception d'un signal indiquant que la transmission de données est autorisée, la transmission des données en paquet d'utilisateur par l'intermédiaire de la deuxième antenne, et lors de la réception d'un signal indiquant que la transmission de données n'est pas autorisée, la sélection d'une troisième antenne ou de la première antenne et la transmission par l'intermédiaire de l'antenne sélectionnée, l'antenne sélectionnée étant différente de la deuxième antenne.

3. Procédé de transmission de données en paquet selon la revendication 1, dans lequel la deuxième antenne transmet la rafale RACH en utilisant une sous-bande qui est différente de la sous-bande utilisée pour la transmission de la rafale RACH par la première antenne.

4. Procédé de transmission de données en paquet selon la revendication 1, comprenant en (d), lorsque le signal indiquant que la transmission de données est autorisée est reçu, la transmission des données en paquet d'utilisateur en utilisant la sous-bande qui a été utilisée pour la transmission de la dernière rafale RACH.

5. Procédé de transmission de données en paquet selon la revendication 1, dans lequel, avant b), le procédé de transmission de paquet comprend en outre le réglage d'un mode de la station mobile à un mode de transmission de rafale RACH pour transmettre la rafale RACH.

6. Procédé de transmission de données en paquet selon la revendication 5, dans lequel, lorsque le signal indiquant que la transmission de données est autorisée est reçu, le mode de transmission de rafale RACH passe à un mode de transmission de données en paquet d'utilisateur.

7. Appareil de transmission pour une station mobile ayant une pluralité d'antennes (180, 190) dans un système d'accès multiple par répartition orthogonale en fréquence, OFDMA, l'appareil de transmission comprenant :
a) un dispositif de mise en correspondance de sous-porteuse et de symbole (120), destiné à mettre en correspondance une rafale de canal à accès aléatoire, RACH, avec une sous-porteuse ;
b) une unité de transformée de Fourier rapide inverse, IFFT, (130) destinée à convertir la rafale RACH mise en correspondance avec la sous-porteuse en données de domaine temporel ; et
c) un bloc de commutation (170) destiné à sélectionner l'une de la pluralité d'antennes (180, 190) pour transmettre la rafale RACH fournie en sortie par l'unité d'IFFT à partir de la pluralité d'antennes (180, 190) ; et
d) un moyen de réception d'un signal incluant des informations consistant à savoir si la station de base permet une transmission de données, en réponse à la rafale RACH ; et
e) un moyen de transmission de données en paquet d'utilisateur par l'intermédiaire de ladite antenne sélectionnée si ledit signal reçu indique que la transmission de données est autorisée, ou sinon de répétition et de sélection d'une antenne différente à l'étape c).

8. Appareil de transmission selon la revendication 7, comprenant en outre une pluralité de convertisseurs radiofréquence (162, 164) destinés à convertir et filtrer la rafale RACH fournie en sortie par l'unité d'IFFT (130) en un signal radiofréquence, et correspondant respectivement à la pluralité d'antennes, dans lequel chacun des convertisseurs radiofréquence (162, 164) est connecté entre le bloc de commutation (170) et l'antenne correspondante parmi la pluralité d'antennes (180, 182).

9. Appareil de transmission selon la revendication 8, dans lequel le bloc de commutation (170) transmet la rafale RACH fournie en sortie par l'unité d'IFFT (130) et les données en paquet d'utilisateur à transmettre par l'intermédiaire de l'appareil de transmission à un convertisseur radiofréquence (162, 164) connecté à l'antenne sélectionnée.

10. Appareil de transmission selon la revendication 9, dans lequel la rafale RACH et les données en paquet d'utilisateur sont transmises par l'intermédiaire d'une fréquence et d'un spectre d'une bande de base.

11. Appareil de transmission selon la revendication 7, comprenant en outre un convertisseur radiofréquence (160), connecté entre l'unité d'IFFT (130) et le bloc de commutation (170), pour convertir et filtrer la rafale RACH fournie en sortie par l'IFFT en un signal radiofréquence.

12. Appareil de transmission selon la revendication 7, comprenant en outre un dispositif d'étalement par transformée de Fourier rapide (110) destiné à réaliser un étalement par transformée de Fourier rapide sur la rafale RACH et à transmettre la rafale RACH étalée au dispositif de mise en correspondance de sous-porteuse et de symbole (120).

13. Appareil de transmission selon la revendication 12, dans lequel le dispositif d'étalement par transformée de Fourier rapide (110) réalise une opération de transformée de Fourier rapide lorsque le nombre de symboles de la rafale RACH correspond à 2ⁿ, et réalise une opération de transformée de Fourier discrète lorsque le nombre de symboles de la rafale RACH ne correspond pas à 2ⁿ.

14. Appareil de transmission selon la revendication 7, comprenant en outre :
un dispositif d'ajout de préfixe cyclique, CP, (140) destiné à ajouter un CP à la rafale RACH convertie en données de domaine temporel par l'intermédiaire de l'unité d'IFFT (130) ; et un convertisseur parallèle-série, P/S, (150) destiné à convertir la rafale RACH à laquelle un CP a été ajouté sous une forme parallèle en un signal série.

15. Appareil de transmission selon la revendication 7, dans lequel des données en paquet d'utilisateur sont transmises par l'intermédiaire d'une antenne par l'intermédiaire de laquelle la rafale RACH est transmise lorsque la rafale RACH est transmise à la station de base et un signal d'acceptation de transmission de données pour la rafale RACH est reçu en provenance de la station de base.

16. Support d'enregistrement pour une station mobile incluant une pluralité d'antennes (180, 190) destinées à la transmission de données en paquet d'utilisateur dans un système d'accès multiple par répartition orthogonale en fréquence, OFDMA, un programme étant écrit sur le support d'enregistrement, dans lequel le programme exécute des fonctions, incluant :
la génération d'une rafale de canal à accès aléatoire, RACH, la sélection d'une première antenne parmi la pluralité d'antennes et la transmission de la rafale RACH par l'intermédiaire de la première antenne à une station de base ;
la réception d'un signal indiquant si la station de base permet une transmission de données de la station de base, en réponse à la rafale RACH ; et
la transmission des données en paquet d'utilisateur par l'intermédiaire de la première antenne, lorsqu'un signal indiquant que la transmission de données est autorisée est reçu, et la sélection d'une deuxième antenne qui est différente de la première antenne et la transmission de la rafale RACH par l'intermédiaire de la deuxième antenne lorsqu'un signal indiquant que la transmission de données n'est pas autorisée est reçu.
